# EUROPEAN PATENT SPECIFICATION

(11) **EP 4 202 626 B1**
(45) Date of publication and mention of the grant of the patent: **11.06.2025**
(21) Application number: 22208945.0
(22) Date of filing: 22.11.2022
(51) Int. Cl.: G06F 3/06

(54) **TARGET OFFLOAD FOR SCALE-OUT STORAGE**
ZIEL-OFFLOAD FÜR SCALE-OUT-SPEICHERUNG
DÉLESTAGE CIBLE POUR STOCKAGE À MISE À L'ÉCHELLE

(30) Priority: 23.12.2021 US 202117560912
(43) Date of publication of application: 28.06.2023
(73) Proprietor: INTEL Corporation, Santa Clara, CA 95054 (US)
(72) Inventor: NIELL, Jose, Franklin, 02038 (US); LI, Yadong, Portland, 97229 (US); JOHNSON, Salma Mirza, Littleton, 01460 (US); PETERSON, Scott D., Beaverton, 97006 (US); SEN, Sujoy, Beaverton, 97007 (US)
(74) Representative: Rummler, Felix

(56) References cited:
- US-A1- 2020 396 126
- US-A1- 2021 072 907
- US-A1- 2021 089 236
- US-A1- 2021 103 403
- US-A1- 2021 247 935

## Description

### BACKGROUND

Data centers provide Virtual Machines (VMs) and containers with access to block addressable storage. Block addressable storage devices can include memory devices based on NAND or NOR technologies. A block can be any size such as but not limited to 512B, 4KB, 8KB, and so forth. Ephemeral block level storage can be tied to a single compute instance (e.g., VM or container) and once the instance is stopped, access to the data is lost. Persistent block level storage is independent of compute instances and can be attached or detached from execution of an instance. Data on persistent volumes is not lost when an instance stops executing.

Storage volumes can be directly attached to a host that executes a VM or container, but the capacity of such local storage can be underutilized or over-constrained. Direct attached storage also presents infrastructure challenges when migrating a VM or container to a different host, resulting in the original storage volume no longer being directly attached. Remote disaggregated storage architectures provide storage servers that are remote from compute nodes and accessed over a network via a network interface. The host can perform mapping of data to locations accessible via a network using open source software stacks such as Ceph.

US 2021/072907 A1 discloses a computer system that comprises: a plurality of storage devices; and a first component functioning both as a network interface card and as an access switch, wherein the first component is configured to manage connections to the plurality of storage devices. A respective storage device comprises: an Ethernet port coupled to the first component; at least one microprocessor; a plurality of PCIe lanes; and a plurality of storage drives with non-volatile memory.

US 2021/089236 A1 relates to receiving memory access requests in a first number of connections from one or more front-end clients destined to a storage system and consolidating the memory access requests to a second number of connections between a network device and the storage system, wherein the second number is less than the first number. Consolidating the memory access requests may include combining read commands with other read commands destined to the storage system among connections of the first number of connections and combining write commands with other write commands destined to a same storage system among connections of the first number of connections.

### SUMMARY OF INVENTION

The present invention is defined in the independent claims. Advantageous, but optional features of the invention are recited in the accompanying dependent claims.

### BRIEF DESCRIPTION OF THE DRAWINGS

FIG. 1 depicts an example system.
FIG. 2 depicts an example system.
FIG. 3A depicts an example system.
FIG. 3B depicts an example system.
FIG. 4 depicts an example manner of communications in a system.
FIG. 5 depicts an example process.
FIG. 6 depicts an example network interface device.
FIG. 7 depicts an example system.

### DETAILED DESCRIPTION

The Non-Volatile Memory Express (NVMe) Specification describes a system for accesses to data storage systems through a Peripheral Component Interconnect Express (PCIe) port. NVMe is described for example, in NVM Express^{™} Base Specification, Revision 1.3c (2018), as well as predecessors, successors, and proprietary variations thereof. NVMe allows a host device to specify regions of storage as separate namespaces. A namespace can be an addressable domain in a non-volatile memory having a selected number of storage blocks that have been formatted for block access. A namespace can include an addressable portion of a media in a solid state drive (SSD), or a multi-device memory space that spans multiple SSDs or other data storage devices. A namespace ID (NSID) can be a unique identifier for an associated namespace. A host device can access a particular non-volatile memory by specifying an NSID, a controller ID and an associated logical address for the block or blocks (e.g., logical block addresses (LBAs)).

Distributed block storage systems provide block device functionality to applications by presenting logical block devices that are stored in segments scattered across a large pool of remote storage devices. To use these logical block devices, applications determine the location of the segments to access. A computing platform can access a storage device using a fabric or network. Various storage protocols exist that enable access to storage devices using a network or fabric. For example, the Non-volatile Memory Express over Fabrics (NVMe-oF) specification is designed to enable access to remote NVMe compatible non-volatile and/or volatile memory devices. For example, NVMe-oF is described at least in NVM Express Base Specification Revision 1.4 (2019), as well as predecessors, successors, and proprietary variations thereof. NVMe-oF compatible devices provide high performance NVMe storage drives to remote systems accessible over a network or fabric.

When a client attempts to access data stored in a remote target server, the client can send a block access request to a target server. Where the target server determines a target storage device to perform the block access request, central processing unit (CPU) resources can be utilized and latency can arise from completion of the block access request can arise due to CPU utilization. In some examples, determination of a target storage from a target server can be offloaded from a CPU to a network interface device. A network interface device can include programmable and/or fixed function circuitry that maps NVMe-oF commands to physical media's Queue Pair and Name Space IDs, or to software emulated queues. A network interface device can perform block to object translation and associated hash operations to perform block-to-object translation, identify a target storage device to receive the command, and provide the command to the target storage device. Data centers can implement end-to-end remote disaggregated storage, without incurring the overhead of using cores at a remote target to map storage commands to storage media.

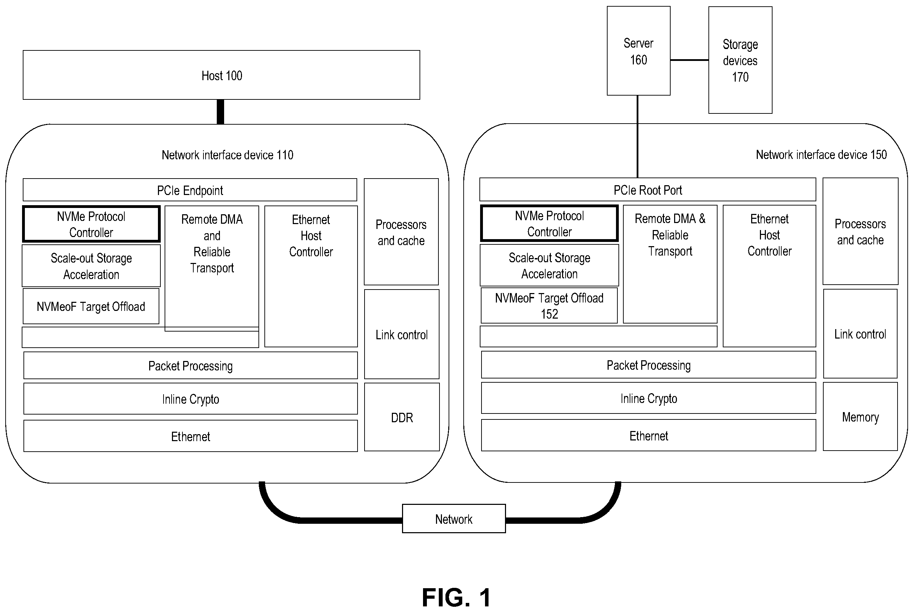

FIG. 1 depicts an example system. Host 100 can provide an NVMe command to sender network interface device 100. Sender network interface device 100 can transmit the NVMe command through a network via one or more switches to target network interface device 150. Target server 160 can offload, from cores implementing NVMe-oF Target Flows on server 160, to target network interface device 150 performance of: based on receipt of an NVMe command (or other memory or storage access command), processing of the received NVMe command. Processing of the received command can include one or more of: determination of a target storage device (e.g., solid state drive (SSD) or persistent storage device) among storage devices 170, modification of the command and associated data, or providing the command and data to a hardware interface to a target storage device. In some examples, as described herein, NVMe-oF target offload 152 can determine a processing path in target network interface device 150 for the storage access command, where the processing path is selected from direct mapped or control plane processing based at least on command type (e.g., read or write) and source of the command (e.g., sender process and/or network interface device 100). A direct mapped processing path can provide the unmodified command and data to a hardware interface (e.g., hardware implementation of a storage device driver) for submission to the target storage device. A control plane processing can provide a modified version of the command and/or data to the hardware interface for submission to the target storage device or through a separate device interface.

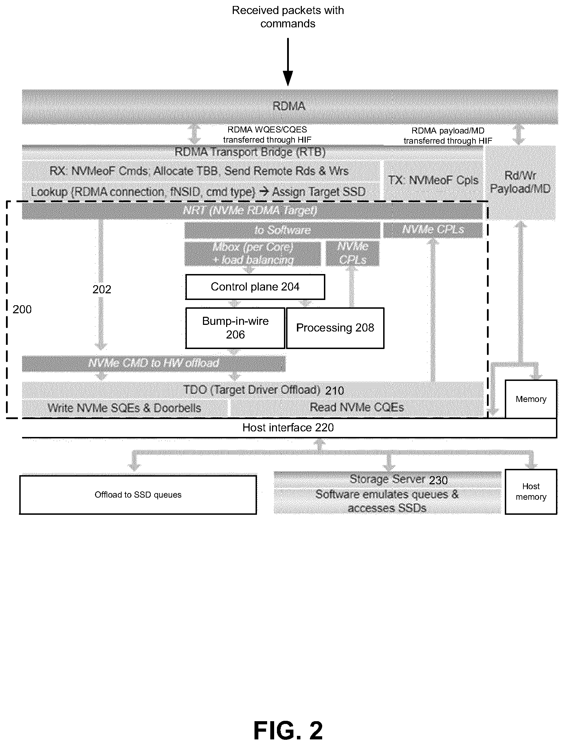

FIG. 2 depicts an example of components of a network interface device. The network interface device can receive an NVMe-oF command in one or more packets from an initiator network interface device. The network interface device can include and utilize NVMe over RDMA Target Scale Out Storage circuitry (NRT) 200 to determine a manner of processing a received NVMe-oF command. For example, NRT 200 can receive Fabric NVMe Commands (fCMDs) from RDMA Transport Bridge (RTB) circuitry. An fCMD can be a modified parent NVMe command or an unmodified NVMe command sent to NRT 200 by a remote initiator (e.g., virtual machine (VM)).

A network interface device can include programmable lookup tables that map an NVMe-oF command to a physical media. Programmable lookup tables (e.g., content addressable memory (CAM) or ternary content-addressable memory (TCAM)) can map RDMA {connection queue pair identifier (QP ID), fabric NSID (fNSID), logical block address (LBA) start and number of LBs, command type (e.g., read or write)} of an NVMe-oF command to {SSD, QP, NSID}, where the SSD QPs can be either physical media or software emulated queues (e.g., software emulated queue of an SSD).

Based on an input of RDMA {connection QP, fabric NSID (fNSID), logical block address (LBA) start and number of LBs, and command type (e.g., read or write)} of an NVMe-oF command, NRT 200 can determine a type of processing of the received command. Types of processing of the received command can include one or more of: direct mapping to the target physical media 202, control plane processing 204, or processing 208 executed by a processor in the target network interface device or a connected host.

For direct mapping 202, based on {SSD, QP, NSID}, NRT 200 can map the received NVMe-oF command to one or more physical storage media and provide an output of {SSD ID, QP ID, NSID}. The commands can be transferred via target driver offload (TDO) 210, described herein, to the one or more physical storage media via a storage server (headed configuration) or to a direct attached storage devices (headless configuration), described herein. For example, NRT 200 can send read operations, via TDO 210, directly to physical media whereas the target network interface device can send write operations to a software emulated device. The software emulated device can process the command in manners described herein with respect to processing 208.

Control plane processing 204 can include processing the command using bump-in-wire processing 206 or processing 208. Bump-in-wire processing 206 can modify the command and provide the modified command with selected parameters of {SSD ID, QP ID, NSID} to TDO 210 to provide to a target media. For example, a data integrity field (DIF) can be modified based on modification of an LBA. Bump-in-wire processing 206 can modify the command by one or more of: modifying the received {SSD, QP, NSID}, modifying the command's logical block addresses (LBAs) (e.g., conversion from virtual to physical LBAs), and/or modifying end-to-end protection information (e.g., T10-DIF, Reference Tag) to account for scale out such as striping, ranges and object storage. For example, for zero based LBA, where an initiator divides up a target space into segments and an address can be converted to smaller zero based addresses at the target network interface device to correspond with a beginning of segment and a checksum can be recalculated based on the adjusted LBA.

Control plane processing 204 can update a lookup table to allow hardware to handle future commands belonging to the flow to identify a destination storage device to receive the command. The tables can be updated without any ramifications to inflight commands, which will continue as normal during table updates. Statistics can be maintained and accessed by the control plane, that also provide indications of less-used flows that can be removed from lookup table to make space for entries for more often used flows or new flows.

For processing 208, the target network interface device can provide the received NVMe-oF command for processing by processor-executed software in a host coupled to the target network interface device or processor-executed software in the target network interface device. The processor-executed software can process the command and not return the command to the network interface device (e.g., TDO). Processing 208 can perform one or more of: perform erasure coding on the command and/or associated data, compute Secure Hash Algorithm (SHA) on data associated with the command, generate multiple commands from the command, combine the command with at least one other command, cause migration of data associated with the command to another storage device, redirect the command to another target, or correct data stored in a target storage device based on erasure coding. Processing 208 can perform reads and writes of storage drives with modified command(s) via TDO 210.

In another scenario, the target network interface device can determine that the received NVMe-oF command is targeted to a storage device that is not connected to the target network interface device or target data has been moved to another storage device. The target network interface device can become a client in order to transmit the command and associated data, if any, via one or more packets to another network interface device that can terminate the command.

TDO 210 can write commands to submission queue entries (SQEs) or send queues (SQs), ring a doorbell (DB), poll for completions in completion queue entries (CQEs) or completion queues (CQs). TDO 210 can perform operations of an NVMe storage device driver. TDO 210 can be implemented as one or more of: an application specific integrated circuit (ASIC), field programmable gate array (FPGA), or other fixed function or programmable circuitry. Host interface 220 could provide a device interface to storage server 230 (headed system) and/or storage device (headless). Host interface 220 could be implemented as a device interface such as PCIe or Compute Express Link (CXL).

NRT 200 can be implemented as one or more of: an application specific integrated circuit (ASIC), field programmable gate array (FPGA), or other fixed function or programmable circuitry. NRT 200 can be programmed using registers (e.g., Control and Status Registers (CSRs) or configuration registers).

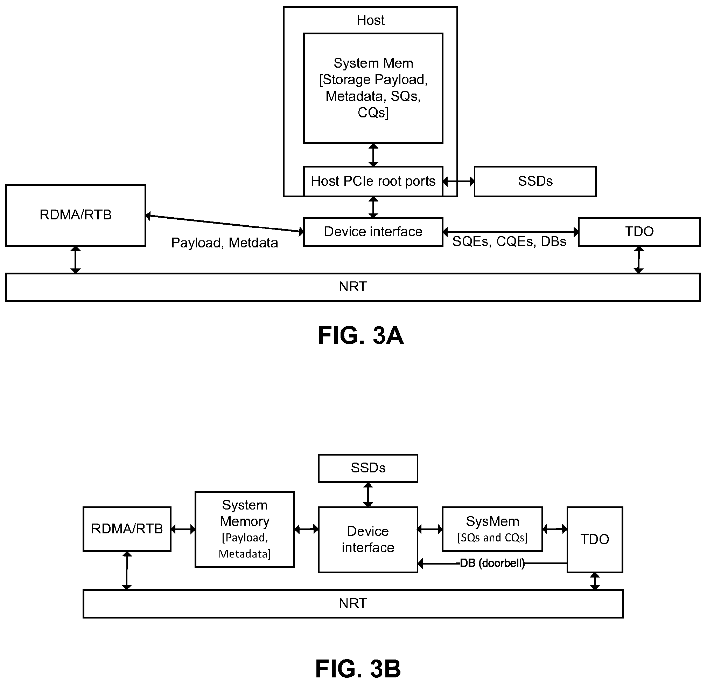

FIG. 3A depicts an example of a headed storage system. In this example, a storage device can be accessed through a host system coupled to the TDO.

FIG. 3B depicts an example where one or more storage devices (e.g., solid state drives (SSDs)) can be coupled to the storage devices through a device interface (e.g., PCIe root port (RP).

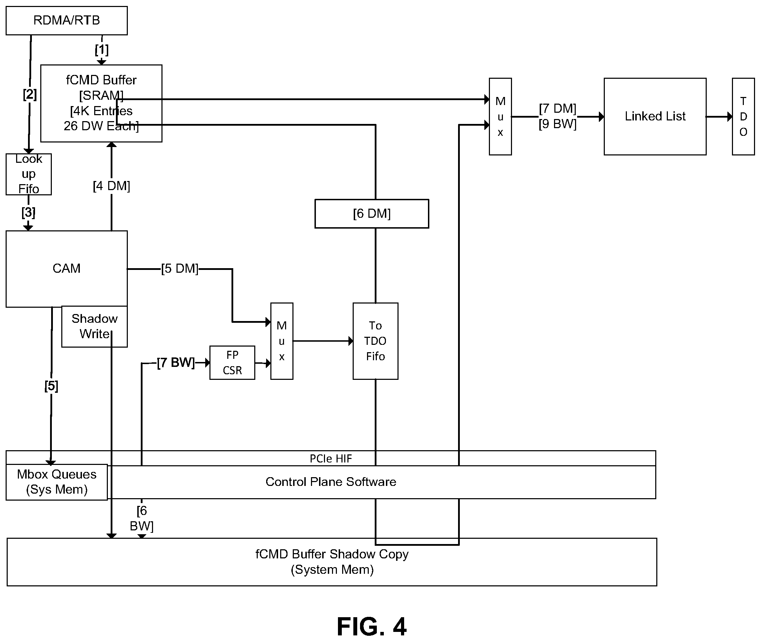

FIG. 4 depicts an example system. Communications of commands to control plane software and responses from control plane software can be made using mailbox and registers. Control plane software can access NVMe commands from memory. An example of operations can be as follows. At [1], RTB performs multiple writes to fCMD Buffer. At [2], RTB adds fCMD identifier to Lookup first in first out (FIFO) queue. At [3], lookup is performed to map RDMA {connection queue pair identifier (QP ID), fabric NSID (fNSID), logical block address (LBA) start and number of LBs, reference tag, command type (e.g., read or write)} of an NVMe-oF command to {SSD, QP, NSID} where the SSD QPs can be either physical media or software emulated queues (e.g., software emulated queue of an SSD).

For a direct mapped (DM) scenario, at [4] fCMD buffer can be updated; [5] fCMD identifier can be added to "To TDO" FIFO; [6] fCMD is read from fCMD buffer; and [7] fCMD can be added to TDO.

For a bump in wire (BW) path: [4] fCMD Shadow Copy can be updated (Shadow Write); [5] fCMD identifier can be sent to Software Mailbox; [6] Software can update fCMD Shadow Copy; [7] Software can add fCMD identifier to "To TDO" FIFO; [8] fCMD Shadow Copy can be Read (Shadow Read); and [9] fCMD can be added to TDO.

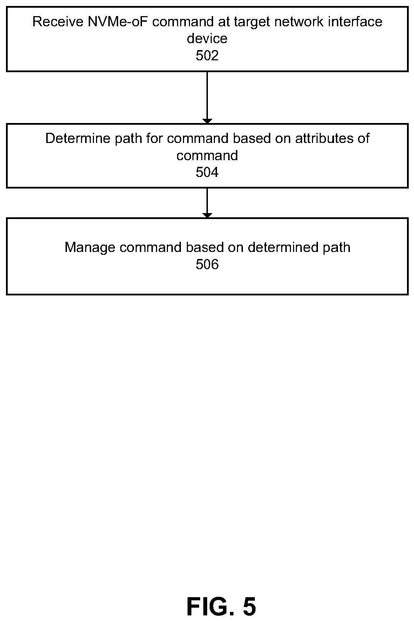

FIG. 5 depicts an example process. At 502, network interface device process receives an NVMe-oF command. The command can be received from an initiator that requests access to a target storage device or another network interface device that re-directed the access request. At 504, network interface device circuitry can determine a manner of processing of the command. For example, based on an input of RDMA {connection QP, fabric NSID (fNSID), logical block address (LBA) start and number of LBs, command type (e.g., read or write)} of an NVMe-oF command, a manner of processing of the received command can be determined. Manners of processing of the received command can include one or more of: direct mapping to the target physical media, control plane processing, or processing the command. At 506, the command can be managed based on the determined path. For example, direct mapping to the target physical media can include providing the command using a driver offload circuitry to a target storage device. The target storage device can include one or more of: a server, cluster of servers, a gateway to one or more servers and/or storage devices, or one or more storage devices. For example, control plane processing can include modifying the command, in manners described herein, and providing the modified command using a driver offload circuitry to a target storage device. For example, processing the command can include modifying the command and performing various operations on the command, as described herein.

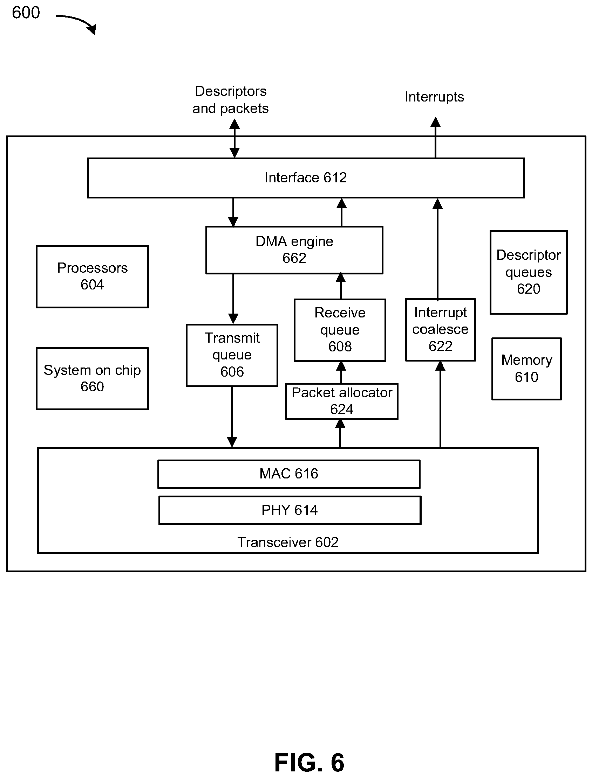

FIG. 6 depicts an example network interface device. The network interface device can include processors and circuitry to direct a storage access command to a storage target based on a received storage access command using one or more of direct mapping, control plane processing, or command processing as described herein. Network interface 600 can include transceiver 602, processors 604, transmit queue 606, receive queue 608, memory 610, and bus interface 612, and DMA engine 652. Transceiver 602 can be capable of receiving and transmitting packets in conformance with the applicable protocols such as Ethernet as described in IEEE 802.3, although other protocols may be used. Transceiver 602 can receive and transmit packets from and to a network via a network medium (not depicted). Transceiver 602 can include PHY circuitry 614 and media access control (MAC) circuitry 616. PHY circuitry 614 can include encoding and decoding circuitry (not shown) to encode and decode data packets according to applicable physical layer specifications or standards. MAC circuitry 616 can be configured to assemble data to be transmitted into packets, that include destination and source addresses along with network control information and error detection hash values.

Processors 604 can be any a combination of a: processor, core, graphics processing unit (GPU), field programmable gate array (FPGA), application specific integrated circuit (ASIC), or other programmable hardware device that allow programming of network interface 600. For example, a "smart network interface" can provide packet processing capabilities in the network interface using processors 604. Configuration of operation of processors 604, including its data plane, can be programmed using Programming Protocol-independent Packet Processors (P4), C, Python, Broadcom Network Programming Language (NPL), or x86 compatible executable binaries or other executable binaries. Processors 604 and/or system on chip 650 can execute instructions to direct a storage access command to a storage target based on a received storage access command using one or more of direct mapping, control plane processing, or command processing as described herein.

Packet allocator 624 can provide distribution of received packets for processing by multiple CPUs or cores using timeslot allocation described herein or RSS. When packet allocator 624 uses RSS, packet allocator 624 can calculate a hash or make another determination based on contents of a received packet to determine which CPU or core is to process a packet.

Interrupt coalesce 622 can perform interrupt moderation whereby network interface interrupt coalesce 622 waits for multiple packets to arrive, or for a time-out to expire, before generating an interrupt to host system to process received packet(s). Receive Segment Coalescing (RSC) can be performed by network interface 600 whereby portions of incoming packets are combined into segments of a packet. Network interface 600 provides this coalesced packet to an application.

Direct memory access (DMA) engine 652 can copy a packet header, packet payload, and/or descriptor directly from host memory to the network interface or vice versa, instead of copying the packet to an intermediate buffer at the host and then using another copy operation from the intermediate buffer to the destination buffer.

Memory 610 can be any type of volatile or non-volatile memory device and can store any queue or instructions used to program network interface 600. Transmit queue 606 can include data or references to data for transmission by network interface. Receive queue 608 can include data or references to data that was received by network interface from a network. Descriptor queues 620 can include descriptors that reference data or packets in transmit queue 606 or receive queue 608. Bus interface 612 can provide an interface with host device (not depicted). For example, bus interface 612 can be compatible with PCI, PCI Express, PCI-x, Serial ATA, and/or USB compatible interface (although other interconnection standards may be used).

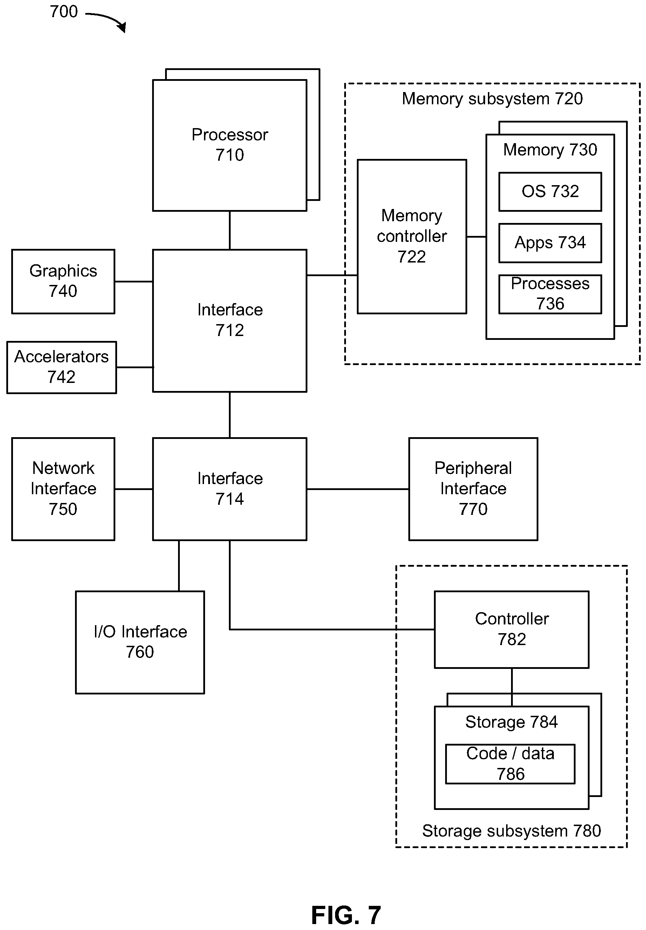

FIG. 7 depicts a system. The system can use embodiments described herein to offload to network interface 750 performance of directing the command to a storage target based on a received storage access command using one or more of direct mapping, control plane processing, or command processing as described herein. System 700 includes processor 710, which provides processing, operation management, and execution of instructions for system 700. Processor 710 can include any type of microprocessor, central processing unit (CPU), graphics processing unit (GPU), XPU, processing core, or other processing hardware to provide processing for system 700, or a combination of processors. An XPU can include one or more of: a CPU, a graphics processing unit (GPU), general purpose GPU (GPGPU), and/or other processing units (e.g., accelerators or programmable or fixed function FPGAs). Processor 710 controls the overall operation of system 700, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 700 includes interface 712 coupled to processor 710, which can represent a higher speed interface or a high throughput interface for system components that needs higher bandwidth connections, such as memory subsystem 720 or graphics interface components 740, or accelerators 742. Interface 712 represents an interface circuit, which can be a standalone component or integrated onto a processor die. Where present, graphics interface 740 interfaces to graphics components for providing a visual display to a user of system 700. In one example, graphics interface 740 can drive a display that provides an output to a user. In one example, the display can include a touchscreen display. In one example, graphics interface 740 generates a display based on data stored in memory 730 or based on operations executed by processor 710 or both. In one example, graphics interface 740 generates a display based on data stored in memory 730 or based on operations executed by processor 710 or both.

Accelerators 742 can be a programmable or fixed function offload engine that can be accessed or used by a processor 710. For example, an accelerator among accelerators 742 can provide compression (DC) capability, cryptography services such as public key encryption (PKE), cipher, hash/authentication capabilities, decryption, or other capabilities or services. In some embodiments, in addition or alternatively, an accelerator among accelerators 742 provides field select controller capabilities as described herein. In some cases, accelerators 742 can be integrated into a CPU socket (e.g., a connector to a motherboard or circuit board that includes a CPU and provides an electrical interface with the CPU). For example, accelerators 742 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 742 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 720 represents the main memory of system 700 and provides storage for code to be executed by processor 710, or data values to be used in executing a routine. Memory subsystem 720 can include one or more memory devices 730 such as read-only memory (ROM), flash memory, one or more varieties of random access memory (RAM) such as DRAM, or other memory devices, or a combination of such devices. Memory 730 stores and hosts, among other things, operating system (OS) 732 to provide a software platform for execution of instructions in system 700. Additionally, applications 734 can execute on the software platform of OS 732 from memory 730. Applications 734 represent programs that have their own operational logic to perform execution of one or more functions. Processes 736 represent agents or routines that provide auxiliary functions to OS 732 or one or more applications 734 or a combination. OS 732, applications 734, and processes 736 provide software logic to provide functions for system 700. In one example, memory subsystem 720 includes memory controller 722, which is a memory controller to generate and issue commands to memory 730. It will be understood that memory controller 722 could be a physical part of processor 710 or a physical part of interface 712. For example, memory controller 722 can be an integrated memory controller, integrated onto a circuit with processor 710.

In some examples, OS 732 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM^{®}, AMD^{®}, Qualcomm^{®}, IBM^{®}, Nvidia^{®}, Broadcom^{®}, Texas Instruments^{®}, among others. In some examples, a driver can configure network interface 750 to perform offloaded operations of directing the command to a storage target based on a received storage access command using one or more of direct mapping, control plane processing, or command processing as described herein. In some examples, a driver can enable or disable offload to network interface 750 to perform directing the command to a storage target based on a received storage access command using one or more of direct mapping, control plane processing, or command processing as described herein. A driver can advertise capability of network interface 750 to perform directing the command to a storage target based on a received storage access command using one or more of direct mapping, control plane processing, or command processing as described herein. OS 732 can communicate with a driver to determine that network interface 750 can perform directing the command to a storage target based on a received storage access command using one or more of direct mapping, control plane processing, or command processing as described herein. OS 732 can command the driver to turn on the capability of network interface 750 to perform directing the command to a storage target based on a received storage access command using one or more of direct mapping, control plane processing, or command processing as described herein.

While not specifically illustrated, it will be understood that system 700 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 700 includes interface 714, which can be coupled to interface 712. In one example, interface 714 represents an interface circuit, which can include standalone components and integrated circuitry. In one example, multiple user interface components or peripheral components, or both, couple to interface 714. Network interface 750 provides system 700 the ability to communicate with remote devices (e.g., servers or other computing devices) over one or more networks. Network interface 750 can include an Ethernet adapter, wireless interconnection components, cellular network interconnection components, USB (universal serial bus), or other wired or wireless standards-based or proprietary interfaces. Network interface 750 can transmit data to a device that is in the same data center or rack or a remote device, which can include sending data stored in memory. Network interface 750 can receive data from a remote device, which can include storing received data into memory. Various embodiments can be used in connection with network interface 750, processor 710, and memory subsystem 720.

In one example, system 700 includes one or more input/output (I/O) interface(s) 760. I/O interface 760 can include one or more interface components through which a user interacts with system 700 (e.g., audio, alphanumeric, tactile/touch, or other interfacing). Peripheral interface 770 can include any hardware interface not specifically mentioned above. Peripherals refer generally to devices that connect dependently to system 700. A dependent connection is one where system 700 provides the software platform or hardware platform or both on which operation executes, and with which a user interacts.

In one example, system 700 includes storage subsystem 780 to store data in a nonvolatile manner. In one example, in certain system implementations, at least certain components of storage 780 can overlap with components of memory subsystem 720. Storage subsystem 780 includes storage device(s) 784, which can be or include any conventional medium for storing large amounts of data in a nonvolatile manner, such as one or more magnetic, solid state, or optical based disks, or a combination. Storage 784 holds code or instructions and data 786 in a persistent state (e.g., the value is retained despite interruption of power to system 700). Storage 784 can be generically considered to be a "memory," although memory 730 is typically the executing or operating memory to provide instructions to processor 710. Whereas storage 784 is nonvolatile, memory 730 can include volatile memory (e.g., the value or state of the data is indeterminate if power is interrupted to system 700). In one example, storage subsystem 780 includes controller 782 to interface with storage 784. In one example controller 782 is a physical part of interface 714 or processor 710 or can include circuits or logic in both processor 710 and interface 714.

A volatile memory is memory whose state (and therefore the data stored in it) is indeterminate if power is interrupted to the device. Dynamic volatile memory requires refreshing the data stored in the device to maintain state. One example of dynamic volatile memory incudes DRAM (Dynamic Random Access Memory), or some variant such as Synchronous DRAM (SDRAM). Another example of volatile memory includes cache or static random access memory (SRAM).

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also comprise a byte-addressable write-in-place three dimensional cross point memory device, or other byte addressable write-in-place NVM device (also referred to as persistent memory), such as single or multi-level Phase Change Memory (PCM) or phase change memory with a switch (PCMS), Intel^{®} Optane^{™} memory, or NVM devices that use chalcogenide phase change material (for example, chalcogenide glass).

A power source (not depicted) provides power to the components of system 700. More specifically, power source typically interfaces to one or multiple power supplies in system 700 to provide power to the components of system 700. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

In an example, system 700 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe.

In an example, system 700 can be implemented using interconnected compute sleds of processors, memories, storages, network interfaces, and other components. High speed interconnects can be used such as PCIe, Ethernet, or optical interconnects (or a combination thereof).

Embodiments herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, each blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. It is noted that hardware, firmware and/or software elements may be collectively or individually referred to herein as "module," or "logic." A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments outside the scope of the appended claims. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z.‴

Illustrative examples of the devices, systems, and methods disclosed herein are provided below.

Flow diagrams as illustrated herein provide examples of sequences of various process actions. The flow diagrams can indicate operations to be executed by a software or firmware routine, as well as physical operations. In some embodiments, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood only as an example, and the process can be performed in a different order, and some actions can be performed in parallel. Additionally, one or more actions can be omitted in various embodiments; thus, not all actions are required in every embodiment. Other process flows are possible.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, and so forth.

## Claims

1. An apparatus (160) comprising:
a target network interface device (150) comprising circuitry configured to:
receive a storage access command, which is transmitted by a client device (100) to a sender network interface device (110) and forwarded by the sender network interface device, through a network via one or more switches, to the target network interface device, wherein the storage access command is configured as a Non-volatile Memory Express over Fabrics, NVMe-oF, command, and is to be processed by the target network interface device; and
determine a processing path in the target network interface device for the storage access command by mapping RDMA, which includes: a connection queue pair identifier, QP ID, a fabric NSID, fNSID, a logical block address, LBA, start and number of logical blocks, and a command type, of the NVMe-oF command either to the QP ID and NSID of a target storage device (170) determined to be associated with the command or to a software emulated queue, the target storage arranged in a plurality of storage devices,
wherein the processing path is within the target network interface device; and wherein the processing path is selected, based at least on the command type and the source of command, to be either direct mapped processing that provides an unmodified version of the command and associated data to a hardware interface for submission to the target storage device, or control plane processing that provides a modified version of the command and associated data to the hardware interface for submission to the target storage device; and wherein the command type comprises a read command or a write command;
wherein the target storage device is either configured to be connected to the target network interface device through a device interface of the apparatus, or accessible through a host system configured to be in communication with the apparatus via the target network interface device;
wherein if the command type comprises the read command and the direct mapped processing is selected, the circuitry is configured to transmit the storage access command directly to the target storage device for processing; and
wherein if the command type comprises the write command and the control plane processing is selected, the circuitry is configured to transmit the storage access command to a software emulated device for processing, the software emulated device arranged on the host system, or the target network interface device.

2. The apparatus of claim 1, wherein the control plane processing is configured to modify one or more of: a received storage device identifier, queue pair identifier, and namespace identifier, the command's logical block addresses, LBAs, from virtual to physical LBAs, and/or end-to-end protection information.

3. The apparatus of claim 1, wherein the control plane processing comprises one or more of: perform erasure coding on the command and/or associated data, compute Secure Hash Algorithm, SHA, on data associated with the command, generate multiple commands from the command, combine the command with at least one other command, cause migration of data associated with the command to another storage device, redirect the command to another target, or correct data stored in the target storage device based on erasure coding.

4. The apparatus of claim 1, wherein the target network interface device comprises one or more of: a network interface controller, NIC, a remote direct memory access, RDMA-enabled NIC, SmartNIC, router, switch, forwarding element, infrastructure processing unit, IPU, data processing unit, DPU, or network-attached appliance or smart end point.

5. The apparatus of claim 1, comprising a first server coupled to the target network interface device, wherein the first server is configured to cause the target network interface device to perform an offloaded operation of determine a processing path in the network interface device for the command.

6. The apparatus of claim 5, comprising a data center comprising a second server configured to transmit at least one packet that comprises the command to the target network interface device.

7. The apparatus of claim 1, further comprising:
at least one programmable lookup table configured to map the NVMe-oF command to the target storage device.

8. The apparatus of claim 7, wherein the at least one programmable lookup table is implemented using content addressable memory, CAM, or ternary content-addressable memory, TCAM.

9. The apparatus of claim 1, wherein the target storage device is any of: a solid state drive, SSD, a server, a cluster of servers, a gateway to one or more servers and/or storage devices.

10. A method performed by the apparatus (160) of any of claims 1-9, the method comprises:
receiving a storage access command, which is transmitted by a client device (100) to a sender network interface device (110) and forwarded by the sender network interface device, through a network via one or more switches, to the target network interface device, wherein the storage access command is configured as a Non-volatile Memory Express over Fabrics, NVMe-oF, command, and is to be processed by the target network interface device; and
determining (504) a processing path in the target network interface device for the storage access command by mapping RDMA, which includes: a connection queue pair identifier, QP ID, a fabric NSID, fNSID, a logical block address, LBA, start and number of logical blocks, and a command type, of the NVMe-oF command either to the QP ID and NSID of a target storage device (170) determined to be associated with the command or to a software emulated queue, the target storage device arranged in a plurality of storage devices,
wherein the processing path is within the target network interface device and wherein the processing path is selected, based at least on command type and the source of command, to be either direct mapped processing that provides an unmodified version of the command and associated data to a hardware interface for submission to the target storage device, or control plane processing that provides a modified version of the command and associated data to the hardware interface for submission to the target storage device; and wherein the command type comprises a read command or a write command;
wherein the target storage device is either configured to be connected to the target network interface device through a device interface of the apparatus, or accessible through a host system configured to be in communication with the apparatus via the target network interface device;
wherein if the command type comprises the read command and the direct mapped processing is selected, the circuitry is configured to transmit the storage access command directly to the target storage device for processing; and
wherein if the command type comprises the write command and the control plane processing is selected, the circuitry is configured to transmit the storage access command to a software emulated device for processing, the software emulated device arranged on the host system, or the target network interface device.

11. The method of claim 10 comprising:
enabling, by an operating system, OS, the target network interface device processing the received storage access command

12. A computer-readable medium comprising instructions that if executed, by one or more processors of the apparatus of any of claims 1-9, cause the one or more processors to perform the method of any of claims 10-11.

## Patentansprüche

1. Vorrichtung (160), die Folgendes umfasst:
Ziel-Netzwerkschnittstellengerät (150), das eine Schaltungsanordnung umfasst, die zu Folgendem ausgebildet ist:
Empfangen eines Speicherzugriffsbefehls, der von einem Client-Gerät (100) zu einem Sender-Netzwerkschnittstellengerät (110) übertragen und von dem Sender-Netzwerkschnittstellengerät über ein Netzwerk über einen oder mehrere Switches an das Ziel-Netzwerkschnittstellengerät weitergeleitet wird, wobei der Speicherzugriffsbefehl als ein nichtflüchtiger Memory Express over Fabrics (NVMe-oF)-Befehl konfiguriert ist und von dem Ziel-Netzwerkschnittstellengerät verarbeitet werden soll; und
Bestimmen eines Verarbeitungspfads in dem Ziel-Netzwerkschnittstellengerät für den Speicherzugriffsbefehl durch Abbilden von RDMA, der Folgendes beinhaltet: eine Verbindungswarteschlangenpaarkennung (QP-ID), eine Fabric-NSID (fNSID), eine logische Blockadresse (LBA), Start und Anzahl logischer Blöcke und einen Befehlstyp des NVMe-oF-Befehls entweder zu der QP-ID und NSID einer Zielspeichervorrichtung (170), von der bestimmt wird, dass sie mit dem Befehl assoziiert ist, oder zu einer Software-emulierten Warteschlange, wobei der Zielspeicher in einer Vielzahl von Speichervorrichtungen angeordnet ist,
wobei sich der Verarbeitungspfad innerhalb des Ziel-Netzwerkschnittstellengeräts befindet; und wobei der Verarbeitungspfad basierend auf mindestens dem Befehlstyp und der Befehlsquelle so ausgewählt ist, dass er entweder eine direkt abgebildete Verarbeitung ist, die eine unmodifizierte Version des Befehls und assoziierte Daten an eine Hardwareschnittstelle zur Einreichung an die Zielspeichervorrichtung bereitstellt, oder eine Steuerebenenverarbeitung, die eine modifizierte Version des Befehls und assoziierte Daten an die Hardwareschnittstelle zur Einreichung an die Zielspeichervorrichtung bereitstellt; und wobei der Befehlstyp einen Lesebefehl oder einen Schreibbefehl umfasst;
wobei die Zielspeichervorrichtung entweder dazu ausgelegt ist, über eine Vorrichtungsschnittstelle der Vorrichtung mit dem Ziel-Netzwerkschnittstellengerät verbunden zu werden, oder über ein Hostsystem, das dazu ausgelegt ist, über das Ziel-Netzwerkschnittstellengerät mit der Einrichtung in Kommunikation zu stehen, zugänglich ist;
wobei, falls der Befehlstyp den Lesebefehl umfasst und die direkt abgebildete Verarbeitung ausgewählt ist, die Schaltungsanordnung dazu ausgelegt ist, den Speicherzugriffsbefehl direkt zur Zielspeichervorrichtung zur Verarbeitung zu übertragen; und
wobei, falls der Befehlstyp den Schreibbefehl umfasst und die Steuerebenenverarbeitung ausgewählt ist, die Schaltungsanordnung dazu ausgelegt ist, den Speicherzugriffsbefehl an eine Software-emulierte Vorrichtung zur Verarbeitung, die Software-emulierte Vorrichtung, die auf dem Hostsystem angeordnet ist, oder das Ziel-Netzwerkschnittstellengerät zu übertragen.

2. Vorrichtung nach Anspruch 1, wobei die Steuerebenenverarbeitung dazu ausgelegt ist, eines oder mehrere von Folgendem zu modifizieren: Eine empfangene Speichervorrichtungskennung, eine Warteschlangenpaarkennung und eine Namensraumkennung, die logischen Blockadressen (LBAs) des Befehls, von virtuellen zu physischen LBAs und/oder End-to-End-Schutzinformationen.

3. Vorrichtung nach Anspruch 1, wobei die Steuerebenenverarbeitung eines oder mehrere von Folgendem umfasst: Durchführen einer Löschcodierung an dem Befehl und/oder assoziierten Daten, Berechnen eines sicheren Hash-Algorithmus (SHA) an Daten, die mit dem Befehl assoziiert sind, Erzeugen mehrerer Befehle aus dem Befehl, Kombinieren des Befehls mit mindestens einem anderen Befehl, Bewirken einer Migration von Daten, die mit dem Befehl assoziiert sind, zu einer anderen Speichervorrichtung, Umleiten des Befehls zu einem anderen Ziel oder Korrigieren von Daten, die in der Zielspeichervorrichtung basierend auf einer Löschcodierung gespeichert sind.

4. Vorrichtung nach Anspruch 1, wobei das Ziel-Netzwerkschnittstellengerät eines oder mehrere aus Folgendem umfasst: eine Netzwerkschnittstellensteuerung (NIC), eine RDMA-fähige (Remote Direct Memory Access) NIC, SmartNIC, Router, Switch, Weiterleitungselement, Infrastrukturverarbeitungseinheit (IPU), Datenverarbeitungseinheit (DPU) oder netzwerkangeschlossenes Gerät oder intelligenter Endpunkt.

5. Vorrichtung nach Anspruch 1, die einen ersten Server umfasst, der mit dem Ziel-Netzwerkschnittstellengerät gekoppelt ist, wobei der erste Server dazu ausgelegt ist, zu bewirken, dass das Ziel-Netzwerkschnittstellengerät eine ausgelagerte Operation zum Bestimmen eines Verarbeitungspfads in dem Netzwerkschnittstellengerät für den Befehl durchführt.

6. Vorrichtung nach Anspruch 5, umfassend ein Datenzentrum, das einen zweiten Server umfasst, der für das Senden von mindestens einem Paket ausgebildet ist, das den Befehl an das Ziel-Netzwerkschnittstellengerät umfasst.

7. Vorrichtung nach Anspruch 1, die ferner Folgendes umfasst:
mindestens eine programmierbare Nachschlagetabelle, die dazu ausgebildet ist, den NVMe-oF-Befehl auf die Zielspeichervorrichtung abzubilden.

8. Vorrichtung nach Anspruch 7, wobei die mindestens eine programmierbare Nachschlagetabelle unter Verwendung eines inhaltsadressierbaren Speichers (CAM) oder eines ternären inhaltsadressierbaren Speichers (TCAM) implementiert ist.

9. Vorrichtung nach Anspruch 1, wobei die Zielspeichervorrichtung eines von Folgendem ist: ein Solid-State-Laufwerk (SSD), ein Server, ein Cluster von Servern, ein Gateway zu einem oder mehreren Servern und/oder Speichervorrichtungen.

10. Verfahren, durchgeführt von der Vorrichtung (160) nach einem der Ansprüche 1-9, wobei das Verfahren Folgendes umfasst:
Empfangen eines Speicherzugriffsbefehls, der von einem Client-Gerät (100) zu einem Sender-Netzwerkschnittstellengerät (110) übertragen und von dem Sender-Netzwerkschnittstellengerät über ein Netzwerk über einen oder mehrere Switches an das Ziel-Netzwerkschnittstellengerät weitergeleitet wird, wobei der Speicherzugriffsbefehl als ein nichtflüchtiger Memory Express over Fabrics (NVMe-oF)-Befehl konfiguriert ist und von dem Ziel-Netzwerkschnittstellengerät verarbeitet werden soll; und
Bestimmen (504) eines Verarbeitungspfads in dem Ziel-Netzwerkschnittstellengerät für den Speicherzugriffsbefehl durch Abbilden von RDMA, der Folgendes beinhaltet: eine Verbindungswarteschlangenpaarkennung (QP-ID), eine Fabric-NSID (fNSID), eine logische Blockadresse (LBA), Start und Anzahl logischer Blöcke und einen Befehlstyp des NVMe-oF-Befehls entweder zu der QP-ID und NSID einer Zielspeichervorrichtung (170), von der bestimmt wird, dass sie mit dem Befehl assoziiert ist, oder zu einer Software-emulierten Warteschlange, wobei die Zielspeichervorrichtung in mehreren Speichervorrichtungen angeordnet ist,
wobei sich der Verarbeitungspfad innerhalb des Ziel-Netzwerkschnittstellengeräts befindet und wobei der Verarbeitungspfad basierend mindestens auf dem Befehlstyp und der Befehlsquelle so ausgewählt ist, dass er entweder eine direkt abgebildete Verarbeitung ist, die eine unmodifizierte Version des Befehls und assoziierte Daten an eine Hardwareschnittstelle zur Einreichung an die Zielspeichervorrichtung bereitstellt, oder Steuerebenenverarbeitung, die eine modifizierte Version des Befehls und assoziierter Daten an die Hardwareschnittstelle zur Einreichung an die Zielspeichervorrichtung bereitstellt; und wobei der Befehlstyp einen Lesebefehl oder einen Schreibbefehl umfasst;
wobei die Zielspeichervorrichtung entweder dazu ausgelegt ist, über eine Vorrichtungsschnittstelle der Vorrichtung mit dem Ziel-Netzwerkschnittstellengerät verbunden zu werden, oder über ein Hostsystem, das dazu ausgelegt ist, über das Ziel-Netzwerkschnittstellengerät mit der Einrichtung in Kommunikation zu stehen, zugänglich ist;
wobei, falls der Befehlstyp den Lesebefehl umfasst und die direkt abgebildete Verarbeitung ausgewählt ist, die Schaltungsanordnung dazu ausgelegt ist, den Speicherzugriffsbefehl direkt zur Zielspeichervorrichtung zur Verarbeitung zu übertragen; und
wobei, falls der Befehlstyp den Schreibbefehl umfasst und die Steuerebenenverarbeitung ausgewählt ist, die Schaltungsanordnung dazu ausgelegt ist, den Speicherzugriffsbefehl an eine Software-emulierte Vorrichtung zur Verarbeitung, die Software-emulierte Vorrichtung, die auf dem Hostsystem angeordnet ist, oder das Ziel-Netzwerkschnittstellengerät zu übertragen.

11. Verfahren nach Anspruch 10, das Folgendes umfasst: Ermöglichen, durch ein Betriebssystem (OS), der Verarbeitung des empfangenen Befehls zum Zugriff auf den Speicher in dem Ziel-Netzwerkschnittstellengerät.

12. Computerlesbares Medium, das Anweisungen umfasst, die, wenn sie durch einen oder mehrere Prozessoren der Vorrichtung nach einem der Ansprüche 1-9 ausgeführt werden, bewirken, dass der eine oder die mehreren Prozessoren das Verfahren nach einem der Ansprüche 10-11 durchführen.

## Revendications

1. Appareil (160) comprenant :
un dispositif d'interface réseau cible (150) comprenant des circuits configurés pour :
recevoir une commande d'accès au stockage, qui est transmise par un dispositif client (100) à un dispositif d'interface réseau émetteur (110) et transférée par le dispositif d'interface réseau émetteur, par l'intermédiaire d'un réseau, par un ou plusieurs commutateurs, au dispositif d'interface réseau cible, où la commande d'accès au stockage est configurée comme une commande NVMe-oF, Non-volatile Memory Express over Fabrics, et doit être traitée par le dispositif d'interface réseau cible ; et
déterminer un chemin de traitement dans le dispositif d'interface réseau cible pour la commande d'accès au stockage en mappant RDMA, qui comprend : un identifiant de paire de files d'attente de connexion, QP ID, un NSID de structure, fNSID, une adresse de bloc logique, LBA, un début et un nombre de blocs logiques, et un type de commande, de la commande NVMe-oF soit vers le QP ID et le NSID d'un dispositif de stockage cible (170) déterminé comme étant associé à la commande, soit vers une file d'attente émulée par logiciel, le stockage cible étant agencé en une pluralité de dispositifs de stockage,
où le chemin de traitement se trouve dans le dispositif d'interface réseau cible ; et où le chemin de traitement est sélectionné, sur la base au moins du type de commande et de la source de la commande, pour être soit un traitement à mappage direct qui fournit une version non modifiée de la commande et des données associées à une interface matérielle pour soumission au dispositif de stockage cible, soit un traitement de plan de contrôle qui fournit une version modifiée de la commande et des données associées à l'interface matérielle pour soumission au dispositif de stockage cible ; et où le type de commande comprend une commande de lecture ou une commande d'écriture ;
où le dispositif de stockage cible est soit configuré pour être connecté au dispositif d'interface réseau cible par l'intermédiaire d'une interface de dispositif de l'appareil, soit accessible par l'intermédiaire d'un système hôte configuré pour être en communication avec l'appareil par l'intermédiaire du dispositif d'interface réseau cible ;
où, si le type de commande comprend la commande de lecture et que le traitement à mappage direct est sélectionné, le circuit est configuré pour transmettre la commande d'accès au stockage directement au dispositif de stockage cible pour traitement ; et
où, si le type de commande comprend la commande d'écriture et que le traitement du plan de contrôle est sélectionné, le circuit est configuré pour transmettre la commande d'accès au stockage à un dispositif émulé par logiciel pour traitement, le dispositif émulé par logiciel étant disposé sur le système hôte, ou au dispositif d'interface réseau cible.

2. Appareil selon la revendication **1,** dans lequel le traitement du plan de contrôle est configuré pour modifier un ou plusieurs des éléments suivants : un identifiant de dispositif de stockage reçu, un identifiant de paire de files d'attente et un identifiant d'espace de noms, les adresses de blocs logiques de la commande, LBA, des LBA virtuelles aux LBA physiques, et/ou les informations de protection de bout en bout.

3. Appareil selon la revendication 1, dans lequel le traitement du plan de contrôle comprend une ou plusieurs des étapes suivantes : effectuer un codage d'effacement sur la commande et/ou les données associées, calculer l'algorithme de hachage sécurisé, SHA, sur les données associées à la commande, générer plusieurs commandes à partir de la commande, combiner la commande avec au moins une autre commande, provoquer la migration des données associées à la commande vers un autre dispositif de stockage, rediriger la commande vers une autre cible, ou corriger les données stockées dans le dispositif de stockage cible sur la base du codage d'effacement.

4. Appareil selon la revendication 1, dans lequel le dispositif d'interface réseau cible comprend un ou plusieurs des éléments suivants : un contrôleur d'interface réseau, NIC, un contrôleur NIC d'accès direct à la mémoire à distance, RDMA-enabled NIC, un contrôleur SmartNIC, un routeur, un commutateur, un élément de transfert, une unité de traitement d'infrastructure, IPU, une unité de traitement de données, DPU, ou un appareil connecté au réseau ou un point d'extrémité intelligent.

5. Appareil selon la revendication 1, comprenant un premier serveur couplé au dispositif d'interface réseau cible, dans lequel le premier serveur est configuré pour amener le dispositif d'interface réseau cible à effectuer une opération de déchargement comprenant de déterminer un chemin de traitement dans le dispositif d'interface réseau pour la commande.

6. Appareil selon la revendication 5, comprenant un centre de données comprenant un deuxième serveur configuré pour transmettre au moins un paquet qui comprend la commande au dispositif d'interface réseau cible.

7. Appareil selon la revendication 1, comprenant en outre :
au moins une table de consultation programmable configurée pour mettre en correspondance la commande NVMe-oF avec le dispositif de stockage cible.

8. Appareil selon la revendication 7, dans lequel l'au moins une table de consultation programmable est mise en œuvre en utilisant une mémoire adressable par le contenu, CAM, ou une mémoire adressable par le contenu ternaire, TCAM.

9. Appareil selon la revendication 1, dans lequel le dispositif de stockage cible est l'un quelconque des éléments suivants : un disque SSD, un serveur, un cluster de serveurs, une passerelle vers un ou plusieurs serveurs et/ou dispositifs de stockage.

10. Procédé exécuté par l'appareil (160) selon l'une quelconque des revendications 1 à 9, le procédé comprenant les étapes suivantes :
recevoir une commande d'accès au stockage, qui est transmise par un dispositif client (100) à un dispositif d'interface réseau émetteur (110) et transférée par le dispositif d'interface réseau émetteur, par l'intermédiaire d'un réseau, par un ou plusieurs commutateurs, au dispositif d'interface réseau cible, où la commande d'accès au stockage est configurée comme une commande NVMe-oF, Non-volatile Memory Express over Fabrics, et doit être traitée par le dispositif d'interface réseau cible ; et
déterminer (504) un chemin de traitement dans le dispositif d'interface réseau cible pour la commande d'accès au stockage en mappant RDMA, qui comprend : un identifiant de paire de files d'attente de connexion, QP ID, un NSID de structure, fNSID, une adresse de bloc logique, LBA, un début et un nombre de blocs logiques, et un type de commande, de la commande NVMe-oF soit vers le QP ID et le NSID d'un dispositif de stockage cible (170) déterminé comme étant associé à la commande, soit vers une file d'attente émulée par logiciel, le dispositif de stockage cible étant agencé en une pluralité de dispositifs de stockage,
où le chemin de traitement se trouve dans le dispositif d'interface réseau cible ; et où le chemin de traitement est sélectionné, sur la base au moins du type de commande et de la source de la commande, pour être soit un traitement à mappage direct qui fournit une version non modifiée de la commande et des données associées à une interface matérielle pour soumission au dispositif de stockage cible, soit un traitement de plan de contrôle qui fournit une version modifiée de la commande et des données associées à l'interface matérielle pour soumission au dispositif de stockage cible ; et où le type de commande comprend une commande de lecture ou une commande d'écriture ;
où le dispositif de stockage cible est soit configuré pour être connecté au dispositif d'interface réseau cible par l'intermédiaire d'une interface de dispositif de l'appareil, soit accessible par l'intermédiaire d'un système hôte configuré pour être en communication avec l'appareil par l'intermédiaire du dispositif d'interface réseau cible ;
où, si le type de commande comprend la commande de lecture et que le traitement à mappage direct est sélectionné, le circuit est configuré pour transmettre la commande d'accès au stockage directement au dispositif de stockage cible pour traitement ; et
où, si le type de commande comprend la commande d'écriture et que le traitement du plan de contrôle est sélectionné, le circuit est configuré pour transmettre la commande d'accès au stockage à un dispositif émulé par logiciel pour traitement, le dispositif émulé par logiciel étant disposé sur le système hôte, ou au dispositif d'interface réseau cible.

11. Procédé selon la revendication 10, comprenant l'étape suivante :
activer, par un système d'exploitation, OS, le dispositif d'interface réseau cible traitant la commande d'accès au stockage reçue.

12. Support lisible par ordinateur comprenant des instructions qui, si elles sont exécutées par un ou plusieurs processeurs de l'appareil de l'une quelconque des revendications 1 à 9, amènent les un ou plusieurs processeurs à exécuter le procédé de l'une quelconque des revendications 10 et 11.
